# EUROPÄISCHE PATENTSCHRIFT

(11) **EP 1 916 025 B1**
(45) Veröffentlichungstag und Bekanntmachung des Hinweises auf die Patenterteilung: **09.12.2009**
(21) Anmeldenummer: 07020136.3
(22) Anmeldetag: 15.10.2007
(51) Int. Cl.: B01D 35/143, E03B 3/02

(54) **Filterelement**
Filter element
Elément de filtre

(30) Priorität: 18.10.2006 DE 202006015977 U
(43) Veröffentlichungstag der Anmeldung: 30.04.2008
(73) Patentinhaber: HAURATON GmbH & Co. KG, 76437 Rastatt (DE)
(72) Erfinder: Naujoks, Volker, 76476 Bischweier (DE)
(74) Vertreter: Geitz, Holger

(56) Entgegenhaltungen:
- DE-A1- 3 617 599
- DE-U1- 20 120 633
- DE-U1- 29 900 942

## Beschreibung

Die vorliegende Erfindung betrifft ein Filterelement zur Wasserfilterung gemäß Anspruch 1.

Solche Filterelemente sind im Stand der Technik bekannt. Üblicherweise wird mit bekannten elektrischen Messinstrumenten das Ansteigen der Wasseroberfläche bei Filterungsverschlechterung elektronisch erfasst und dabei auch aufgezeichnet, wann und wie oft der Überlauf in Funktion getreten ist. Solche Systeme sind allerdings neben ihren hohen Anschaffungskosten und dem mit ihnen verbundenen Energieverbrauch ebenfalls als wartungsintensiv und insbesondere hinsichtlich der Bestromung als störanfällig zu bezeichnen.

Ein entsprechendes Filterelement ist zudem bereits aus der deutschen Gebrauchsmusterschrift DE 299 00 942 U1 vorbekannt.

Dort ist beschrieben, das durch eine Zuleitung ankommende Wasser im Rahmen einer Filteranlage auf ein Filterelement zu führen, welches den Ablauf im wesentlichen überdeckt. Bei einer Überfrachtung des Filters mit den auszufilternden Schmutzteilchen wird das schräg angestellte Filter als Ableitung für das Wasser eingesetzt, welches im folgenden in einen der Filteranlage zugeordneten Behälter einfließt. In dem Behälter wird das Wasser zunächst wiederum gesammelt und kann von dort über einen dem Behälter zugeordneten Überlauf abfließen.

Solche Systeme unterliegen jedoch regelmäßiger Wartung, da mit zunehmender Filterungsverschlechterung ein Rückstau des zulaufenden Wassers verbunden ist. Dementsprechend ist es notwendig, die in solchen Systemen vorhandenen Filter regelmäßig von Schmutzkörpern zu befreien. Jedoch ist es, insbesondere bei integrierten Filtersystemen, häufig nur sehr schwierig zu erkennen, ob ein Filterelement bereits gereinigt werden muss oder ob es sich noch in einem verwendungsfähigen Zustand befindet. Ein deutlicher Hinweis auf die Verschlechterung eines Filterelements ist dann gegeben, wenn aufgrund der angestauten Wassermenge der Überlauf betätigt wird. Es kann somit darauf zurückgeschlossen werden, dass das eingesetzte Filter die anstehende Wassermenge nicht mehr verarbeiten kann und dabei weitgehend nicht mehr betriebsbereit ist. Allerdings erfolgt eine Überprüfung des Filters nur selten gleichzeitig mit einem besonders starken Wasseraufkommen, etwa einem Regenereignis, so dass zum Zeitpunkt der Besichtigung des Filters bereits wieder eine Normalisierung des Zustands eingetreten sein könnte, insbesondere der Überlauf nicht mehr betätigt ist.

Vor diesem Hintergrund liegt der Erfindung die Aufgabe zu Grunde, ein Filterelement zu schaffen, welches in einfacher und kostengünstiger Weise einen Rückschluss auf die Betätigung des Überlaufs zulässt und somit eine bessere Einschätzung des aktuellen Filterzustands ermöglicht.

Gelöst wird diese Aufgabe durch ein Filterelement gemäß den Merkmalen des Hauptanspruches. Sinnvolle Weiterbildungen dieser Erfindung können den Unteransprüchen entnommen werden.

Erfindungsgemäß wird das Filterelement von einem Zulauf gespeist, von dem das zu filternde Wasser in Richtung eines Ablaufs strömt. Im Bereich Ablaufs ist das Filterelement vorgesehen, welches eine Reinigung des abfließenden Wassers gewährleisten soll. Bei einer Verstopfung des Filterelements staut sich das Wasser in dem vom Zulauf gespeisten Schacht, wodurch der Wasserspiegel in diesem Schacht gegebenenfalls über das Ablaufniveau ansteigt. Dem Filterelement ist für diesen Zweck ein Überlauf zugeordnet, über den das Wasser behelfsweise ungefiltert an dem Filterelement vorbei abfließen kann. Um ein Anspringen dieses Überlaufs zu dokumentieren ist dem Überlauf ein erinnerungsfähiges Signalmedium zugeordnet, welches durch die Einwirkung des durch den Überlauf abfließenden Wassers wahrnehmbar verändert wird. Bei einer, regelmäßig durchgeführten, Überprüfung des Filterelements ist es nunmehr nicht erforderlich, das gesamte Filterelement auszubauen um eine Überprüfung des Zustands durchzuführen, vielmehr genügt es, das leicht zu entfernende Signalmedium aus einer hierfür vorgesehenen Halterung herauszunehmen, wobei eine Begutachtung des Signalmediums für einen Rückschluss auf den Zustand des Filters ausreicht. In dem Falle, dass die Überprüfung des Signalmediums eine starke Beanspruchung des Überlaufs ergibt, kann anschließend das Filterelement ausgetauscht oder erneuert werden.

Die Veränderungen des Signalmediums können aufgrund einer Reaktion, etwa einer chemischen Reaktion, des Signalmediums mit dem Wasser beruhen, wobei der Grad der Veränderung des Signalmediums vorzugsweise mit der Dauer der Beaufschlagung des Signalmediums mit Wasser ansteigt. Somit ist eine stärkere Reaktion zu verzeichnen, wenn der Überlauf andauernd vom Wasser als Ausweichmöglichkeit genutzt wird, bei einer lediglich gelegentlich auftretenden Benutzung des Überlaufs wäre eine schwache Reaktion zu verzeichnen. Anhand von Randinformationen, etwa der Einbeziehung von Informationen über den Niederschlag, kann ein Wartungsarbeiter dann entscheiden, ob das Filter zu erneuern ist. Fand etwa im Zeitraum der Überprüfung ein besonders starker Niederschlag statt, so wäre gegebenenfalls bei einer Überschreitung der Kapazität des Ablaufs nicht notwendigerweise eine Erneuerung des Filters durchzuführen.

Die Veränderung des Signalmediums kann mit Vorteil etwa optisch oder auch haptisch wahrnehmbar erfolgen, so dass der Wartungsarbeiter ohne weitere Hilfsmittel eine schnelle Einschätzung über die Veränderung des Signalmediums vornehmen kann. Denkbar wäre es beispielsweise, dass sich das Signalmedium durch die Beaufschlagung mit Wasser farblich verändert, so dass etwa zunächst eine schwache Einfärbung auftritt, bei stärkerer Beanspruchung sich dann die Einfärbung ihrerseits verstärkt. Eine solche Einfärbung ist mit besonderem Vorteil im Anschluss durch eine Vergleichstabelle quantifizierbar, so dass das Signalmedium vom Wartungstechniker lediglich mit der Tabelle verglichen werden muss, um eine Einschätzung vorzunehmen.

Besonders sinnvoll ist es dazu, wenn dass Signalmedium von dem Filterelement trennbar ist, so dass es erst zum Zwecke einer Überprüfung herausgenommen werden und in Augenschein genommen werden kann. Alternativ ist es möglich, das Signalmedium so anzuordnen, dass es von außen einsehbar ist.

Selbstverständlich ist es wenig sinnvoll, nach einer Erneuerung des Filters das Signalmedium wieder unverändert in das Filterelement einzusetzen. Hierzu ist es möglich, das Signalmedium durch Austausch zu ersetzen. Alternativ kann das Signalmedium auch durch eine Wiederaufbereitung, etwa im Wege einer Gegenreaktion, die durch beaufschlagen des Signalmediums mit einer entsprechenden Flüssigkeit initiiert werden kann. Ein derart aufbereitetes Signalmedium nimmt wieder die ursprünglichen Eigenschaften ein und wird im folgenden bei erneuter Beaufschlagung mit Wasser ebenfalls erneut wie bereits zuvor beschrieben reagieren.

Mit besonderem Vorteil ist dem Filterelement zumindest ein zusätzliches Signalmedium im Bereich zwischen Überlauf und dem Zulaufniveau angeordnet, so dass der Wartungstechniker nicht erst bei angesprungenem Überlauf Rückschlüsse darauf ziehen kann dass das Filter nicht mehr leitfähig ist, sondern dass auch vorab bereits eine sich anbahnende Verschlechterung des Filters festgestellt werden kann. In Weiterbildung dieses Gedankens sind weitere Signalmedien entlang der Längserstreckung des Filters angeordnet, durch die eine Einschätzung des gesamten Wasseraufkommens im Schacht vorgenommen werden kann.

Dem Filterelement ist mit Vorteil eine, vorzugsweise lösbar befestigte, Gitterstruktur zugeordnet, durch welche beim Anspringen des Überlaufs die überlaufende Flüssigkeit in den Ablauf übertreten kann. Dabei ist das Signalmedium mit Vorteil ebendieser Gitterstruktur ebenfalls vorzugsweise lösbar zugeordnet. Im Bereich der genannten Gitterstruktur ist die Filteranordnung derart verbreitert, dass trotz des Gitters der Durchlaufquerschnitt der Filteranordnung im Bereich des Überlaufs nicht verringert ist. Dadurch ist gewährleistet, dass durch den Überlauf selbst, der die genannte Gitterstruktur aufweist, eine zusätzliche Anstauung des Wassers und ein damit verbundener Rückstau in den Zulauf vermieden ist.

Das Filter selbst besteht im wesentlichen aus einem Filterohr, welches aus einem Kranz von Einzelrohren hergestellt ist. Die Einzelrohre weisen dabei vorzugsweise jeweils unterschiedliche Gitterstrukturen auf, welche ein dreidimensional durchströmbares Grob- und/oder Feinfilter bilden. Im Gegensatz zu einer etwa lediglich eindimensional durchströmbaren Filteranordnung erhöht dies die Kapazität des Filters, so dass das Filter eine größere Fläche aufweist und somit auch einer größeren Beanspruchung standhält.

Üblicherweise ist der Überlauf geodätisch oberhalb des Ablaufniveaus angeordnet, so dass der Wasserspiegel innerhalb des Schachts zunächst ansteigen muss, bevor der Überlauf in Anspruch genommen wird. In entsprechender Weiterbildung ist der Ablauf bezüglich seiner Höhenlage zwischen Filterrohr und Überlauf angeordnet, so dass das im Schacht ansteigende Wasser ab einer Steighöhe im Bereich des Ablaufniveaus durch die Filterwandung des Filterelements hindurch in den Ablauf einläuft. Im Fall einer Verschmutzung des Filters, wenn also ein Eintreten des Wassers durch die Filterwandung nicht mehr möglich ist, staut sich das Wasser in dem Schacht auch über das Ablaufniveau hinaus an und wird den Wasserspiegel so weit erhöhen, dass das Wasser letztlich über den oberhalb des Ablaufs angeordneten Überlauf in den Ablauf einfließen kann.

In einer alternativen Ausgestaltung ist das Filterrohr zwischen Ablauf und Überlauf angeordnet. Bei einem gut funktionierenden Filter wird lediglich der zuunterst angeordnete Bereich des Filterrohrs beansprucht, mit fortschreitender Verschmutzung und folglich steigendem Wasserstand im Schacht wird der benutzte Bereich des Filterrohrs zunehmend nach oben ausgedehnt. Geodätisch oberhalb des Filterrohrs ist der Überlauf angeordnet, durch welchen das Wasser im Falle eines vollständig verschmutzten oder überlasteten Filters behelfsweise ungefiltert in den Ablauf eintreten kann.

In vorteilhafter Ausgestaltung ist das Filterrohr zumindest mit einer Filterschicht aus Textil- und/oder Schwammfilter beaufschlagt. Es kann ebenfalls zusätzliche Filterschichten für lösliche Schmutzfrachten aufweisen.

Mit Vorteil ist zudem das Filterelement aus einem nichtrostenden Material hergestellt.

Das Wasser wird in entsprechender Ausgestaltung in einem Ablaufschacht gesammelt, in welchem das Filterelement mithilfe von Schellen gehalten ist, welche das Filterrohr umschließen. Im Falle einer Erneuerung des Filterelements können diese Schellen als Montageführung eingesetzt werden, so dass die Montage insofern hierdurch erleichtert ist.

Anstelle einer vollständigen Erneuerung des Filters kann dem Filter mit Vorteil auch eine Rückspüleinheit angeschlossen werden, welche das Filter zum Zwecke einer Reinigung durchspült.

Bei einem Einsatz eines solchen Filterelements in einem Ablaufschacht oder auch bei einer Anordnung des Zulaufs oberhalb des Überlaufs kann es geschehen, dass in den Überlauf von oberhalb der Filteranordnung Wasser eingespült wird, so dass eine Benetzung des Signalmediums erfolgt, ohne dass der Überlauf tatsächlich angesprungen wäre. Hierzu kann der Bereich des Überlaufs von einer Überwölbung umgriffen sein, so dass eine Wasserbenetzung von außerhalb des Zulaufs vermieden ist.

Einem Schacht können selbstverständlich mit Vorteil auch mehrere erfindungsgemäße Filterelemente zugeordnet werden.

Die vorstehende Erfindung wird im folgenden an Hand eines in der Zeichnung dargestellten Ausführungsbeispiels näher erläutert.

Es zeigen
- Figur 1: einen Schacht mit einem Zulauf und zwei Abläufen sowie diesen Abläufen zugeordneten Filterelementen in perspektivischer Darstellung,
- Figur 2: ein Filterelement mit einem oberhalb des Filterrohrs gelegenen Ablauf in einer perspektivischen Darstellung,
- Figur 3: das Filterelement gemäß Figur 2 in einer vergrößerten Darstellung,
- Figur 4: das Filterelement gemäß Figur 3 in einer vergrößerten Darstellung des Überlaufs,
- Figur 5: einen Gitterkorb zur Anordnung im Bereich des Überlaufs eines Filterelements,
- Figur 6: ein Filterrohr zur Verwendung mit einem Filterelement in perspektivischer Darstellung,
- Figur 7: das Filterrohr gemäß Figur 6 in einer vergrößerten Darstellung,
- Figur 8: das Filterrohr gemäß Figur 7 in einer perspektivischen Darstellung ohne Außenhülle, und
- Figur 9: eine alternative Ausgestaltung des Filterelements gemäß Figur 2.

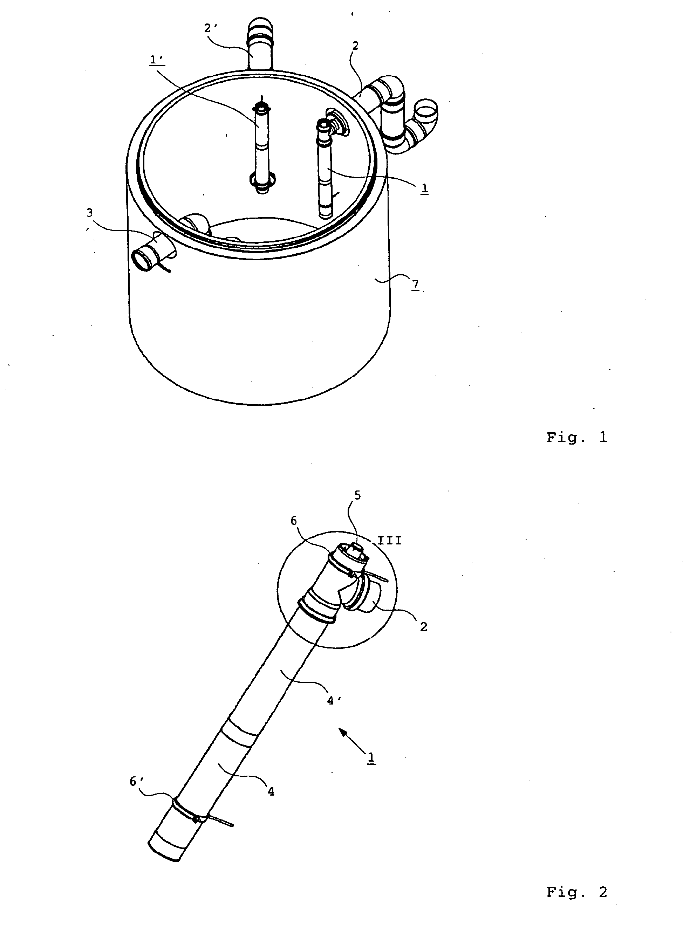

Figur 1 zeigt einen Schacht 7, welcher unter anderem durch einen Zulauf 3 gespeist und über zwei Abläufe 2,2' entlastet wird. Den Abläufen 2,2' sind Filterelemente 1,1' zugeordnet, welche das durch den Zulauf 3 herangeführte Wasser vor dem Übertritt in die Abläufe 2,2' filtern. Den Filterelementen 1,1' ist jeweils ein Überlauf zugeordnet, durch den das Wasser im Falle eines verschmutzten Filters behelfsweise austreten kann. Der Schacht 7 ist von außen durch einen Wartungstechniker zugreifbar, welcher im Falle eines verschmutzten Filters das Filter erneuern kann. Eine Erneuerung kann darin bestehen, dass das Filterrohr durch Anschluss einer Rückspüleinheit durchgespült wird, so dass die darin gehaltenen Schmutzpartikel gelöst und abgeführt werden. Im Bereich des Überlaufs 5 weist jedes der Filterelemente ein Signalmedium 9 auf, welches im Falle einer Beaufschlagung des Überlaufs 5 mit Wasser eine optische Veränderung erfährt. Im Zuge dieser Veränderung wird bei einer kurzfristigen Beaufschlagung des Signalmediums 9 mit Wasser eine leichte Einfärbung festzustellen sein, welche durch verstärkte, längere Beaufschlagung des Signalmediums 9 mit Wasser sich zusätzlich verstärkt. Anhand der Intensität der Verfärbung kann der Wartungstechniker feststellen, über welchen Zeitraum hinweg das Signalmedium 9 mit Wasser in Kontakt war, also der Überlauf 5 in Anspruch genommen wurde. Hieraus kann darauf zurückgeschlossen werden, wie stark das Filterelement 1,1' verschmutzt ist, also welche Mengen von Wasser nicht wie gewünscht durch das Filter, sondern durch den Überlauf 5 in die Abläufe 2,2' geflossen sind.

Figur 2 zeigt eines der beiden in Figur 1 den Abläufen 2,2' zugeordneten Filterelemente 1 in einer vergrößerten Darstellung. Darin ist erkennbar, dass dem Filterelement 1 der Ablauf 2 im Bereich oberhalb des Filterrohrs 4 zugeordnet ist. Das im Schacht ansteigende Wasser wird demgemäß über den Ablauf 2 abfließen, nachdem es das Filterrohr durchquert hat. Das Filterrohr 4 ist aufgrund seiner Gitterstruktur dreidimensional durchströmbar. Mit zunehmender Verschmutzung des Filterrohrs 4 wird zunehmend weniger Wasser durch das Filterrohr 4 an den Ablauf 2 abgegeben werden können, so dass das Wasser im Schacht 7 bis über das Ablaufniveau ansteigen wird. In diesem Fall kann das Wasser über einen zusätzlich oberhalb des Ablaufs 2 angeordneten Überlauf 5 abfließen, wenngleich diese Möglichkeit lediglich eine Behelfslösung darstellt, nachdem das über den Überlauf 5 abgeführte Wasser nicht gefiltert ist. Um dies zu vermeiden ist es sinnvoll, das Filterrohr 4 so weit instand zu halten, dass eine genügende Filterung des Wassers von ihm ermöglicht ist. Im Bereich des Überlaufs 5 ist dazu ein Signalmedium 9 angeordnet, welches bei einem Anspringen des Überlaufs 5, wodurch es mit Wasser beaufschlagt wird, eine wahrnehmbare Markierung erfährt. Diese Markierung kann, wie vorstehend beschrieben, von einem Wartungstechniker ausgewertet werden.

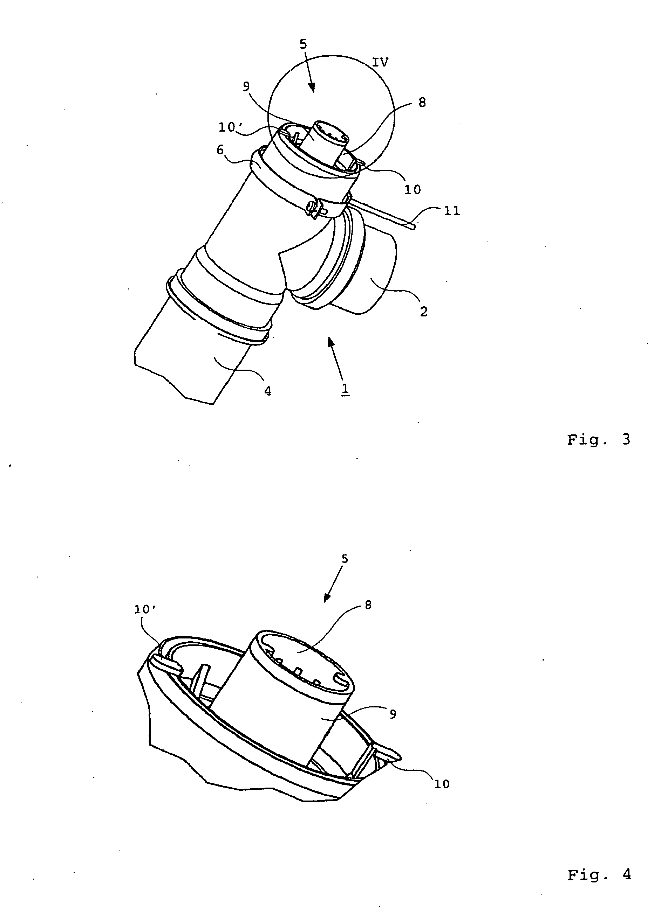

Das Filterelement ist mithilfe zweier Schellen 6,6' mit dem Schacht 7 verbunden, so dass eine Fixierung des Filterelements gewährleistet ist. Im Falle eines Filteraustauschs kann das neue Filter mithilfe der fest mit dem Schacht 7 verbundenen Schellen 6,6' wieder exakt positioniert werden. Der in der Figur mit III markierte Bereich ist in vergrößerter Darstellung in Figur 3 nochmals dargestellt.

Figur 3 zeigt den in Figur 2 bereits markierten Bereich des Überlaufs 5 des Filterelements 1. Der Überlauf 5 ist durch einen Rohrstutzen gebildet, in welchem ein Gitterkorb 8 eingesetzt ist. Dieser Gitterkorb ist mithilfe zweier Auflager 10,10' auf das Filterelement 1 aufgesetzt, wodurch es bezüglich des Filterelements positioniert, jedoch für einen von außen herannahenden Wartungstechniker eingreifbar ist. Dem Gitterkorb 8 ist ein Signalmedium 9 in Form einer röhrenartigen Hülse zugeordnet, welches die Beaufschlagung des Überlaufs 5 mit Wasser optisch anzeigt. Zur Begutachtung des Signalmediums 9 kann der gesamte Gitterkorb 8 abgenommen werden und im folgenden das Signalmedium 9 von dem Gitterkorb 8 entfernt werden, soweit dies nötig erscheint. Der über einen Bolzen 11 mit dem Schacht 7 verbundene Rohrstutzen des Ablaufs 2 verbleibt in jedem Fall in dem Schacht 7, wohingegen auch das Filterrohr 4 zum Zwecke der Reinigung oder des Austauschs von dem Rohrstutzen gelöst werden kann. Der Bereich des Überlaufs 5 ist in der Darstellung nochmals mit IV gekennzeichnet, wobei dieser Bereich nochmals in Figur 4 vergrößert dargestellt ist.

Figur 4 zeigt erneut den Bereich des Überlaufs 5, wobei hier der in den Rohrstutzen des Filterelements 1 eingesetzte Gitterkorb 8 dargestellt ist. Der Gitterkorb 8 ist durch Auflager 10,10' lösbar mit dem Filterelement 1 verbunden, wobei wiederum der Gitterkorb 8 mit einem Signalmedium 9 beaufschlagt ist.

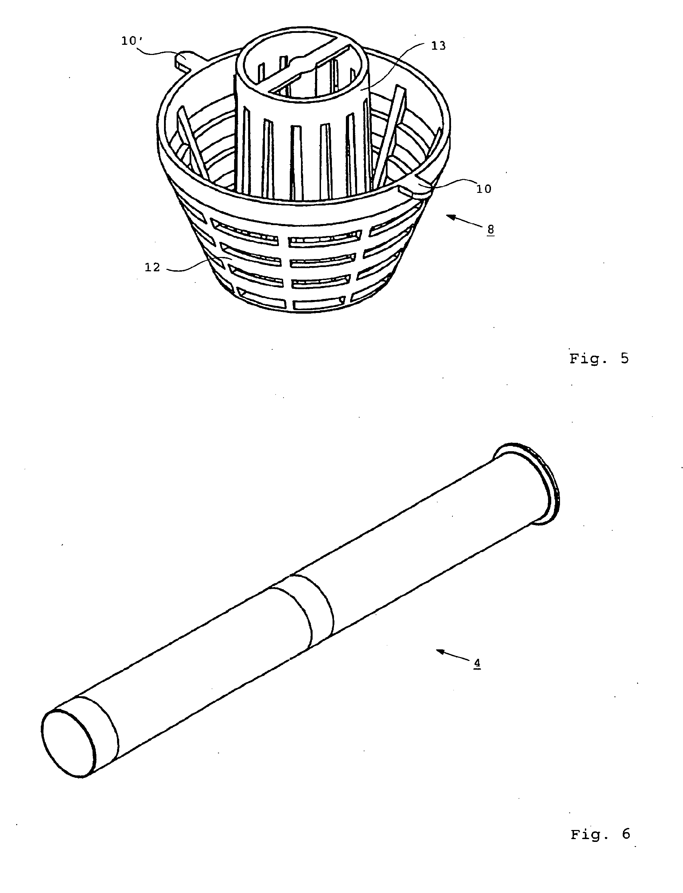

Figur 5 zeigt nochmals Gitterkorb 8 ohne Filterelement 1 und Signalmedium 9. Im Bereich des Überlaufs 5 ist das Filterelement 1 derart verbreitert, dass trotz der durch die Gitterstruktur 12 beeinträchtigte Querschnittsfläche des Überlaufs 5 eine Verringerung des Durchlaufquerschnitts nicht gegeben ist.

Figur 6 zeigt ein Filterrohr 4, durch welches das im Schacht ansteigende Wasser vor dem Abfließen in den Ablauf 2 gefiltert wird. Im Falle einer Verschmutzung des Filterrohrs 4 kann dieses vom Filterelement 1 zum Zwecke eines Austauschs getrennt werden oder alternativ mit einer Rückspüleinheit beaufschlagt werden, mithilfe derer eine Reinigung des Filters auch im Einbauzustand erfolgen kann.

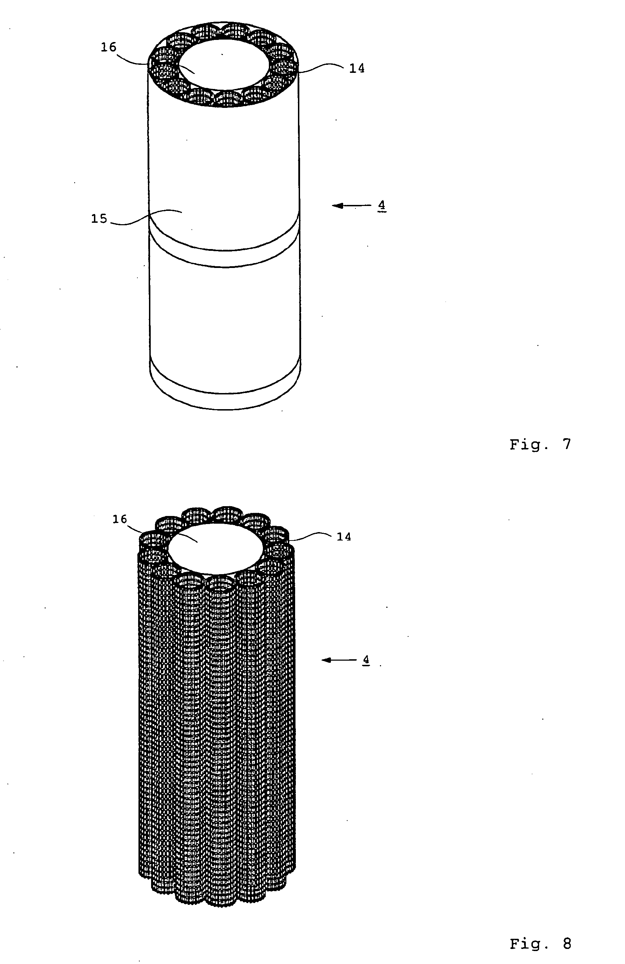

Figur 7 zeigt das zuvor beschriebene Filterrohr 4 in einer Schnittansicht, wobei die in dem Filterrohr 4 enthaltenden Gitterstrukturen eines Grobfilters 14 erkennbar sind. Dieses Grobfilter 14 ist innenseitig von einem das Wasser in Richtung des Ablaufs 2 führenden Innenablauf 16 ausgekleidet. Dies ermöglicht eine gleichmäßige Auslastung des Filters, indem das Wasser bedarfsweise entlang des Filterrohrs 4 eintreten und sich im Innenablauf 16 bewegen kann. Ein Außenmantel 15 umgibt das Filterrohr 4 und hält es zusammen.

Figur 8 zeigt erneut das Filterrohr 4, jedoch unter Weglassung des Außenmantels 15, wodurch die als Kranz von Einzelrohren hergestellten Grobfilter 14 erkennbar sind.

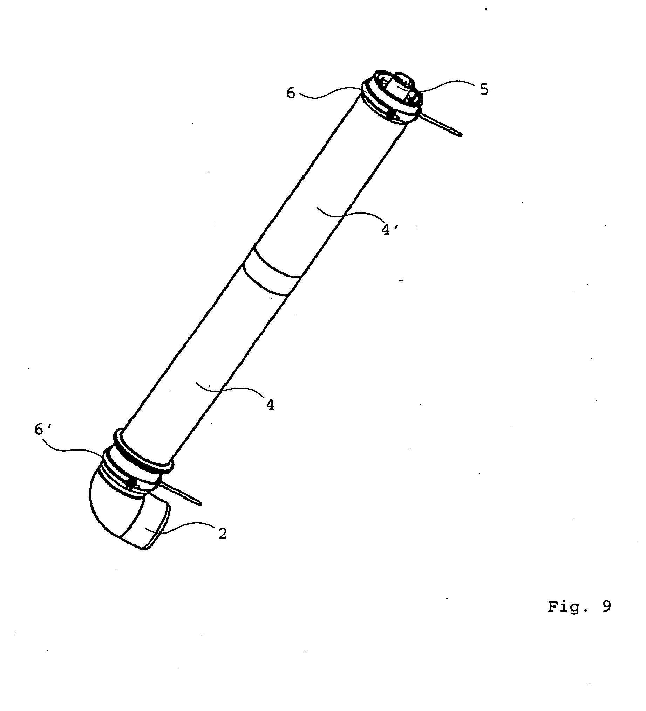

Figur 9 zeigt eine alternative Ausgestaltung des Filterelements 1, wobei der Ablauf 2 geodätisch unterhalb des Filterrohrs 4 angeordnet wird. Hierdurch wird das im Schacht 7 ansteigende Wasser das Filterrohr 4 zunächst in einem dem Ablauf 2 zugewandten Bereich beaufschlagen. Bei einer Verstärkung des Wasserzulaufs und einem Ansteigen des Wasserspiegels im Schacht 7, etwa durch eine Verschlechterung der Filterwirkung des Filterrohrs 4, steigt das Wasser auch um das Filterrohr 4 herum an und wird einen größeren Bereich desselben zur Filterung in Anspruch nehmen. Im Extremfall wird das Wasser bis zum oberhalb des Filterrohrs 4 angeordneten Überlauf 5 ansteigen und gegebenenfalls über den Überlauf 5 ungefiltert durch das Filterrohr 4 hindurch in den Ablauf 2 abgegeben werden.

Vorstehend ist somit ein Filterelement beschrieben, welches mit einfachen Mitteln den Verschmutzungsgrad des mit dem Filterelement verbundenen Filters erkennbar macht, ohne dass ein vorheriger Ausbau des Filters selbst erforderlich ist. Dazu wird dem mit dem Filter verbundenen Überlauf ein Signalmedium zugeordnet, welches bei Beaufschlagung des Überlaufs eine wahrnehmbare Veränderung erfährt. Hieraus lässt sich auf den Zustand des Filters zurückschließen.

### BEZUGSZEICHENLISTE

- 1,1': Filterelement
- 2,2': Ablauf
- 3: Zulauf
- 4,4': Filterrohr
- 5: Überlauf
- 6,6': Schelle
- 7: Schacht
- 8: Gitterkorb
- 9: Signalmedium
- 10,10': Auflager
- 11: Bolzen
- 12: Gitterstruktur
- 13: Aufnahme für Signalmedium
- 14: Grobfilter
- 15: Außenmantel
- 16: Innenablauf

## Patentansprüche

1. Filterelement zur Wasserfilterung, welches einen Ablauf (2,2') und zumindest einen Überlauf (5) aufweist, wobei das Filterelement den Ablauf (2,2') speist und dem der zumindest eine Überlauf (5) derart zugeordnet ist, dass im Falle eines Rückstaus des Wassers in einem Schacht (7) das Wasser durch den Überlauf (5) zumindest ungefiltert abfließen kann,
**dadurch gekennzeichnet, dass** dem Überlauf (5) ein spannungsfreies, erinnerungsfähiges Signalmedium (9) zugeordnet ist, welches im Falle eines Anspringens des Überlaufs (5) von einer wahrnehmbaren Veränderung betroffen ist.

2. Filterelement gemäß Anspruch 1, **dadurch gekennzeichnet, dass** die Veränderung auf einer Reaktion, etwa einer chemischen Reaktion, zwischen Wasser und Signalmedium (9) beruht, wobei der Grad der Veränderung des Signalmediums (9) vorzugsweise mit der Dauer der Beaufschlagung des Signalmediums (9) mit dem Wasser ansteigt.

3. Filterelement gemäß einem der Ansprüche 1 oder 2, **dadurch gekennzeichnet, dass** das Signalmedium (9) sich aufgrund der Beaufschlagung mit Wasser zumindest optisch und/oder haptisch verändert.

4. Filterelement gemäß einem der vorhergehenden Ansprüche, **dadurch gekennzeichnet, dass** die Intensität der Veränderung einer vorhersehbaren Regelmäßigkeit unterliegt.

5. Filterelement gemäß einem der vorhergehenden Ansprüche, **dadurch gekennzeichnet, dass** das Signalmedium (9) von dem Überlauf (5) bestimmungsgemäß trennbar und herausnehmbar und/oder von außen einsehbar ist.

6. Filterelement gemäß Anspruch 5, **dadurch gekennzeichnet, dass** das Signalmedium (9) durch Austausch erneuerbar ist.

7. Filterelement gemäß einem der Ansprüche 5 oder 6, **dadurch gekennzeichnet, dass** das Signalmedium (9), etwa im Wege einer Gegenreaktion, wiederherstellbar ist.

8. Filterelement gemäß einem der vorhergehenden Ansprüche, **dadurch gekennzeichnet, dass** dem Filterelement (1) zumindest ein zusätzliches Signalmedium (9) im Bereich zwischen Überlauf (5) und Ablaufniveau zugeordnet ist.

9. Filterelement gemäß einem der vorhergehenden Ansprüche, **dadurch gekennzeichnet, dass** dem Filterelement (1) entlang seiner Längserstreckung wenigstens ein zusätzliches Signalmedium (9) zugeordnet ist.

10. Filterelement gemäß einem der vorhergehenden Ansprüche, **dadurch gekennzeichnet, dass** das Filterelement (1) im Bereich des Überlaufs (5) eine, vorzugsweise lösbar befestigte, Gitterstruktur (12) aufweist, durch welche das Wasser beim Überlaufen hindurchtritt, wobei das Signalmedium (9) vorzugsweise der Gitterstruktur (12) zugeordnet ist.

11. Filterelement gemäß Anspruch 11, **dadurch gekennzeichnet, dass** das Filterelement (1) im Bereich des Überlaufs (5) derart verbreitert ist, dass trotz des Gitters (12) der Durchlaufquerschnitt der Filteranordnung im Bereich des Überlaufs (5) nicht verringert ist.

12. Filterelement gemäß einem der vorhergehenden Ansprüche, **dadurch gekennzeichnet, dass** das Filterelement (1) als ein Filterrohr (4) gebildet ist, wobei das Filterrohr (4) aus einem Kranz von Einzelrohren besteht, welche jeweils, vorzugsweise durch unterschiedliche Gitterstrukturen, als dreidimensionaler Grob- und/oder Feinfilter (14,15) durchströmbar sind.

13. Filterelement gemäß einem der vorhergehenden Ansprüche, **dadurch gekennzeichnet, dass** der Überlauf (5) geodätisch oberhalb des Ablaufniveaus angeordnet ist.

14. Filterelement gemäß Anspruch 13, **dadurch gekennzeichnet, dass** der Ablauf (2,2') zwischen Filterrohr (4) und Überlauf (5) angeordnet ist.

15. Filterelement gemäß Anspruch 13, **dadurch gekennzeichnet, dass** das Filterrohr (4) zwischen Ablauf (2,2') und Überlauf (5) angeordnet ist.

16. Filterelement gemäß einem der vorhergehenden Ansprüche, **dadurch gekennzeichnet, dass** der Ablauf (2,2') im Höhenniveau eines Zulaufs (3) eines Schachtes oder darunter angeordnet werden kann.

17. Filterelement gemäß einem der vorhergehenden Ansprüche, **dadurch gekennzeichnet, dass** das Filterrohr (4) zumindest mit einer Filterschicht aus Textil- und/oder Schwammfilter beaufschlagt ist.

18. Filterelement gemäß Anspruch 17, **dadurch gekennzeichnet, dass** das Filterrohr (4) zusätzliche Filterschichten für lösliche Schmutzfrachten aufweist.

19. Filterelement gemäß einem der vorhergehenden Ansprüche, **dadurch gekennzeichnet, dass** das Filterelement (1) aus nichtrostendem Material hergestellt ist.

20. Filterelement gemäß einem der vorhergehenden Ansprüche, **dadurch gekennzeichnet, dass** das Filterelement (1) mithilfe von Schellen (6,6') im Bereich des Schachts (7) gehalten werden kann welche bei einer Erneuerung des Filterelements (1) als Montageführung einsetzbar sind.

21. Filterelement gemäß einem der vorhergehenden Ansprüche, **dadurch gekennzeichnet, dass** dem Filterelement (1) eine Rückspüleinheit anschließbar ist.

22. Filterelement gemäß einem der vorhergehenden Ansprüche, **dadurch gekennzeichnet, dass** der Überlauf (5), vorzugsweise durch eine zumindest teilweise Überwölbung, gegen eine Wasserbenetzung geschützt ist.

23. Filterelement gemäß einem der vorhergehenden Ansprüche, **dadurch gekennzeichnet, dass** das Filterrohr (4,4') aus, vorzugsweise über Steckverbindungen verbindbaren, Rohrabschnitten hergestellt ist, wobei die einzelnen Rohrabschnitte vorzugsweise unterschiedliche Filtereigenschaften aufweisen.

24. Schacht mit mehreren Filterelementen gemäß einem der vorhergehenden Ansprüche.

## Claims

1. A filter element for water filtration, which has a drain (2, 2') and at least one overflow (5), the filter element supplying the drain (2, 2'), and with which the at least one overflow (5) is associated in such a way that in case of a backup of the water in a shaft (7), the water can at least drain unfiltered through the overflow (5),
**characterized in that** an unpowered, reminder-capable signal medium (9) is associated with the overflow (5), which is affected by a perceptible change in case of a startup of the overflow (5).

2. The filter element according to Claim 1, **characterized in that** the change is based on a reaction, such as a chemical reaction, between water and signal medium (9), the degree of the change of the signal medium (9) preferably rising with the duration of the application of the water to the signal medium (9).

3. The filter element according to one of Claims 1 or 2, **characterized in that** the signal medium (9) at least visually and/or haptically changes because of the application of water.

4. The filter element according to one of the preceding claims, **characterized in that** the intensity of the change is subject to a predictable regularity.

5. The filter element according to one of the preceding claims, **characterized in that** the signal medium (9) is intended to be separable and removable from the overflow (5) and/or is externally visible.

6. The filter element according to Claim 5, **characterized in that** the signal medium (9) is renewable by replacement.

7. The filter element according to one of Claims 5 or 6, **characterized in that** the signal medium (9) is reproducible, for example, in the course of a counter reaction.

8. The filter element according to one of the preceding claims, **characterized in that** at least one additional signal medium (9) is associated with the filter element (1) in the area between overflow (5) and drain level.

9. The filter element according to one of the preceding claims, **characterized in that** at least one additional signal medium (9) is associated with the filter medium (1) along its longitudinal extension.

10. The filter element according to one of the preceding claims, **characterized in that** the filter medium (1) has a preferably detachably fastened lattice structure (12) in the area of the overflow (5), through which the water passes when it overflows, the signal medium (9) preferably being associated with the lattice structure (12).

11. The filter element according to Claim 11, **characterized in that** the filter element (1) is widened in the area of the overflow (5) in such a way that in spite of the lattice (12), the passage cross-section of the filter configuration is not reduced in the area of the overflow (5).

12. The filter element according to one of the preceding claims, **characterized in that** the filter element (1) is formed as a filter tube (4), the filter tube (4) comprising a collar of individual tubes, which are each perfusable, preferably through different lattice structures, as three-dimensional coarse and/or fine filters (14, 15).

13. The filter element according to one of the preceding claims, **characterized in that** the overflow (5) is situated geodetically above the drain level.

14. The filter element according to Claim 13, **characterized in that** the drain (2, 2') is situated between filter tube (4) and overflow (5).

15. The filter element according to Claim 13, **characterized in that** the filter tube (4) is situated between drain (2, 2') and overflow (5).

16. The filter element according to one of the preceding claims, **characterized in that** the drain (2, 2') can be situated at the height level of an inflow (3) of a shaft or underneath it.

17. The filter element according to one of the preceding claims, **characterized in that** the filter tube (4) has a least one filter layer made of textile and/or sponge filter applied to it.

18. The filter element according to Claim 17, **characterized in that** the filter tube (4) has additional filter layers for soluble contaminant cargo.

19. The filter element according to one of the preceding claims, **characterized in that** the filter element (1) is produced from non-rusting material.

20. The filter element according to one of the preceding claims, **characterized in that** the filter element (1) can be held with the aid of clamps (6, 6') in the area of the shaft (7), which are usable as an installation guide upon a replacement of the filter element (1).

21. The filter element according to one of the preceding claims, **characterized in that** a backflushing unit is attachable to the filter element (1).

22. The filter element according to one of the preceding claims, **characterized in that** the overflow (5) is protected from water wetting, preferably by an at least partial upper arch.

23. The filter element according to one of the preceding claims, **characterized in that** the filter tube (4, 4') is produced from tube sections, which are preferably connectable via plug connections, the individual tube sections preferably having different filter properties.

24. A shaft having multiple filter elements according to one of the preceding claims.

## Revendications

1. Élément filtrant pour la filtration d'eau, lequel présente un écoulement (2, 2') et au moins un trop-plein (5), ledit élément filtrant alimentant ledit écoulement (2, 2'), et auquel est associé l'au moins un trop-plein (5) de manière à ce qu'en cas de retenue de l'eau dans un puits (7), l'eau puisse écouler à travers dudit trop-plein (5) du moins de manière non filtrée,
**caractérisé en ceci** qu'audit trop-plein (5) est associé un moyen de signal (9) sans tension, apte à mémoriser, lequel, en cas d'initiation du trop-plein (5), est affecté par une altération perceptible.

2. Élément filtrant selon la revendication 1, **caractérisé en ce**ci que ladite altération se base sur une réaction, par exemple une réaction chimique, entre l'eau et ledit moyen de signal (9), le degré d'altération dudit moyen de signal (9) augmentant de préférence avec la durée pendant laquelle ledit moyen de signal (9) est en contact avec l'eau.

3. Élément filtrant selon l'une des revendications 1 ou 2, **caractérisé en ce**ci que ledit moyen de signal (9) s'altère en raison de son contact avec de l'eau du moins de manière optique et/ou haptique.

4. Élément filtrant selon l'une des revendications précédentes, **caractérisé en ce**ci que l'intensité de l'altération est soumise à une régularité prévisible.

5. Élément filtrant selon l'une des revendications précédentes, **caractérisé en ce**ci que ledit moyen de signal (9) peut, en fonction de sa destination, être séparé dudit trop-plein (5) et retiré et/ou vu de l'extérieur.

6. Élément filtrant selon la revendication 5, **caractérisé en ce**ci que ledit moyen de signal (9) peut être renouvelé en remplaçant.

7. Élément filtrant selon l'une des revendications 5 ou 6, **caractérisé en ce**ci que ledit moyen de signal (9) peut être récupéré, par exemple au moyen d'une réaction adverse.

8. Élément filtrant selon l'une des revendications précédentes, **caractérisé en ce**ci qu'audit élément filtrant (1) est associé un moyen de signal (9) supplémentaire au niveau entre ledit trop-plein (5) et le niveau dudit écoulement.

9. Élément filtrant selon l'une des revendications précédentes, **caractérisé en ce**ci qu'audit élément filtrant (1) est associé, le long de son extension longitudinale, au moins un moyen de signal (9) supplémentaire.

10. Élément filtrant selon l'une des revendications précédentes, **caractérisé en ce**ci que ledit élément filtrant (1) présente une structure grillagée (12) fixée, de préférence de manière démontable, dans le domaine dudit trop-plein (5), à travers de laquelle l'eau sort en débordant, ledit moyen de signal (9) étant associé de préférence à ladite structure grillagée (12).

11. Élément filtrant selon la revendication 11, **caractérisé en ce**ci que ledit élément filtrant (1) est élargi dans le domaine dudit trop-plein (5) de manière à ce que la section de passage des filtres disposés dans le domaine dudit trop-plein (5) ne soit pas réduite malgré ladite grille (12).

12. Élément filtrant selon l'une des revendications précédentes, **caractérisé en ce**ci que ledit élément filtrant (1) est réalisé comme tube filtrant (4), ledit tube filtrant (4) étant composé d'un anneau de tubes individuels, lesquels peuvent être traversés, de préférence à travers de différentes structures grillagées, comme filtre grossier et/ou fin tridimensionnel (14, 15).

13. Élément filtrant selon l'une des revendications précédentes, **caractérisé en ce**ci que ledit trop-plein (5) est disposé, du point de vue géodésique, au-dessus du niveau dudit écoulement.

14. Élément filtrant selon la revendication 13, **caractérisé en ce**ci que ledit écoulement (2, 2') est disposé entre ledit tube filtrant (4) et ledit trop-plein (5).

15. Élément filtrant selon la revendication 13, **caractérisé en ce**ci que ledit tube filtrant (4) est disposé entre ledit écoulement (2, 2') et ledit trop-plein (5).

16. Élément filtrant selon l'une des revendications précédentes, **caractérisé en ce**ci que ledit écoulement (2, 2') peut être disposé au niveau d'une entrée (3) d'un puits ou en-dessous.

17. Élément filtrant selon l'une des revendications précédentes, **caractérisé en ce**ci que ledit tube filtrant (4) est revêtu au moins d'une couche filtrante composé d'un filtre textile et/ou spongieux.

18. Élément filtrant selon la revendication 17, **caractérisé en ce**ci que ledit tube filtrant (4) présente des couches filtrantes supplémentaires destinées aux charges en polluants solubles.

19. Élément filtrant selon l'une des revendications précédentes, **caractérisé en ce**ci que ledit élément filtrant (1) est réalisé en matériau inoxydable.

20. Élément filtrant selon l'une des revendications précédentes, **caractérisé en ce**ci que ledit élément filtrant (1) peut être tenu au moyen des colliers (6, 6') dans le domaine dudit puits (7), lesquels peuvent être utilisés comme guidage de montage en cas de remplacement dudit élément filtrant (1).

21. Élément filtrant selon l'une des revendications précédentes, **caractérisé en ce**ci que sur ledit élément filtrant (1), une unité de retour d'eau peut être raccordée.

22. Élément filtrant selon l'une des revendications précédentes, **caractérisé en ce**ci que ledit trop-plein (5) est protégé contre une humectation de préférence par une voûte au moins partielle.

23. Élément filtrant selon l'une des revendications précédentes, **caractérisé en ce**ci que ledit tube filtrant (4, 4') est réalisé en tronçons de tuyauterie pouvant être reliés de préférence par des assemblages à emboîtement, lesdits tronçons de tuyauterie individuels présentant de préférence des propriétés de filtration différentes.

24. Puits comportant plusieurs éléments filtrants selon l'une des revendications précédentes.
